# EUROPÄISCHE PATENTSCHRIFT

(11) **EP 4 062 502 B1**
(45) Veröffentlichungstag und Bekanntmachung des Hinweises auf die Patenterteilung: **15.11.2023**
(21) Anmeldenummer: 20781493.0
(22) Anmeldetag: 28.09.2020
(51) Int. Cl.: H01T 13/08, H01T 13/54, H01T 21/02

(54) **VERFAHREN ZUR HERSTELLUNG EINER VORKAMMERZÜNDKERZE**
METHOD FOR PRODUCING A PRE-CHAMBER SPARK PLUG
PROCÉDÉ DE PRODUCTION DE BOUGIE D'ALLUMAGE À PRÉ-CHAMBRE

(30) Priorität: 19.11.2019 DE 102019217833
(43) Veröffentlichungstag der Anmeldung: 28.09.2022
(73) Patentinhaber: Robert Bosch GmbH, 70442 Stuttgart (DE)
(72) Erfinder: KASKE, Stephan, 75447 Sternenfels Diefenbach (DE); ROTTMANN, Philipp, 96103 Hallstadt (DE); YILMAZ, Ugur, 71706 Markgroeningen (DE); BLANKMEISTER, Matthias, 42579 Heiligenhaus (DE); BUDDE, Matthias, 71679 Asperg (DE)
(86) Internationale Anmeldenummer: PCT/EP2020/077067
(87) Internationale Veröffentlichungsnummer: WO 2021/099016

(56) Entgegenhaltungen:
- EP-A1- 2 525 452
- DE-A1-102017 107 728
- DE-U1-202008 015 598

## Beschreibung

### Stand der Technik

Die vorliegende Erfindung betrifft ein Verfahren zur Herstellung einer Vorkammerzündkerze.

Vorkammerzündkerzen sind aus dem Stand der Technik in unterschiedlichen Ausgestaltungen bekannt. Eine Vorkammer der Vorkammerzündkerze wird üblicherweise mittels einer Kappe gegenüber einem Brennraum einer Brennkraftmaschine definiert. In der Kappe sind dabei Durchgangslöcher vorgesehen, so dass nach einer Zündung in der Vorkammer Fackelstrahlen durch die Durchgangslöcher in den Brennraum der Brennkraftmaschine gelangen können und ein dort befindliches Gemisch entzünden können. Ein Problemkreis bei Vorkammerzündkerzen liegt darin begründet, dass jede Brennkraftmaschine andere Bedingungen, insbesondere die Lage der Vorkammerzündkerze zu einem Einspritzstrahl eines Kraftstoffs in die Brennkammer sowie Position von Kraftstoffinjektoren und der Position der Vorkammerzündkerze am Brennraum aufweisen. Deshalb ist für jede Brennkraftmaschine eine abgestimmte Positionierung der Bauteile der Vorkammerzündkerze notwendig, um eine sichere Zündung und bei einem Gaswechsel auch einen ausreichenden Gasaustausch innerhalb der Vorkammer zu ermöglichen. Hierzu wurde in der DE 10 2017 107 728 A1 ein Verfahren vorgeschlagen, bei dem eine Kappe der Vorkammerzündkerze in Bezug zu einem schon hergestellten Außengewinde, mit welchem die Vorkammerzündkerze in einem Zylinderkopf oder dgl. fixiert wird, aufgesetzt und verschweißt wird.

### Offenbarung der Erfindung

Das erfindungsgemäße Verfahren zur Herstellung einer Vorkammerzündkerze mit den Merkmalen des Anspruches 1 weist demgegenüber den Vorteil auf, dass ein schnelles und einfaches Verfahren zur Herstellung einer Vorkammerzündkerze möglich ist. Dabei kann auf einfache und schnelle Weise eine Ausrichtung einer Kappe mit wenigstens einer Durchgangsöffnung relativ zu einem Außengewinde der Vorkammerzündkerze, mit welchem die Vorkammerzündkerze in einem Zylinderkopf oder dgl. fixiert wird, ermöglich werden. Dadurch kann ein Gemischaustausch und ein Abgasaustausch innerhalb der Vorkammer optimal erfolgen und Fackelstrahlen nach einer Zündung in der Vorkammer der Vorkammerzündkerze schneller und früher sowie gezielt in einen Brennraum einer Brennkraftmaschine eingebracht werden. Dabei ist die Durchgangsöffnung der Kappe zu einem Gewindeanfang und/oder Gewindeende des Außengewindes der Vorkammerzündkerze an definierten Positionen vorgesehen. Dies wird erfindungsgemäß dadurch erreicht, dass das Verfahren die nachfolgenden Schritte umfasst:

Zuerst wird die Vorkammerzündkerze ohne Kappe und ohne ein Außengewinde bereitgestellt. Anschließend wird die Kappe, welche wenigstens eine Durchgangsöffnung, vorzugsweise eine Vielzahl von Durchgangsöffnungen, aufweist, in beliebiger Ausrichtung an der Vorkammerzündkerze montiert. Da keine Ausrichtarbeit notwendig ist, kann dieser Vorgang besonders einfach und schnell durchgeführt werden. Anschließend wird ein Außengewinde an der Vorkammerzündkerze derart hergestellt, dass ein Gewindebeginn und/oder ein Gewindeende des Außengewindes in Bezug auf die wenigstens eine Durchgangsöffnung der Kappe ausgerichtet wird. Somit wird eine definierte Relativposition zwischen dem Gewindebeginn und/oder Gewindeende des Außengewindes und der Durchgangsöffnung der Kappe erreicht. Dadurch kann eine sicher wiederholbare Montierbarkeit der Vorkammerzündkerze an Brennkraftmaschinen ermöglicht werden. Dadurch wird ein hohes Qualitätsniveau der Montage der Vorkammerzündkerzen sichergestellt.

Somit kann das Außengewinde relativ zu der Durchgangsöffnung der Kappe je nach Anwendungsfall für verschiedene Brennkraftmaschinen immer optimal hergestellt werden. Im Vergleich mit dem Stand der Technik ist dabei die Herstellung der Vorkammerzündkerze deutlich vereinfacht, da die Kappe in beliebiger Weise an der Vorkammerzündkerze, die noch kein Außengewinde aufweist, angebracht werden kann und anschließend lediglich ein Ausrichtschritt notwendig ist, um dann das Außengewinde herzustellen. Die Kappe kann beispielsweise mittels Schweißen oder anderen Fixiermaßnahmen an der Vorkammerzündkerze befestigt werden.

Die Unteransprüche zeigen bevorzugte Weiterbildungen der Erfindung.

Vorzugsweise wird das Außengewinde mittels Rollen oder Schneiden hergestellt. Durch diese beiden Verfahren zur Herstellung des Außengewindes kann eine Position eines Gewindeanfangs und/oder Gewindeendes sicher angefahren werden und der Gewindeanfang und/oder das Gewindeende exakt positioniert werden.

Besonders bevorzugt wird eine Bestimmung einer Position des Gewindeanfangs und/oder Gewindeendes in Abhängigkeit einer Position der Durchgangsöffnung in der Kappe mittels optischer Verfahren durchgeführt. Die Vorkammerzündkerze selbst kann dann beispielsweise in einer Einspannung um ihre Längsachse gedreht werden, um dann an der vorbestimmten Position das Außengewinde mit dem entsprechend positionierten Gewindeanfang und/oder Gewindeende herzustellen.

Weiter bevorzugt weist das Verfahren zusätzlich den Schritt des Vorsehens einer Scheibe mit einer vorbestimmten Dicke auf, wobei die Scheibe benachbart zu der Umfangsfläche für das Außengewinde der Vorkammerzündkerze angeordnet wird, an welchem später das Außengewinde hergestellt werden soll. Die Scheibe weist besonders bevorzugt eine konstante Dicke auf.

Besonders bevorzugt wird eine Dicke der Scheibe in Abhängigkeit einer Lage der Durchgangsöffnungen der Kappe bestimmt. Anschließend wird dann das Außengewinde an der Vorkammerzündkerze hergestellt. Hierbei wird besonders bevorzugt ein Standard-Außengewinde vorgesehen.

Die Scheibe benachbart zum Außengewinde ist vorzugsweise eine Dichtscheibe.

Ferner wird weiter bevorzugt eine Steigung des Außengewindes, basierend auf einem Winkel einer Durchgangsöffnung in der Kappe zu einer Mittelachse X-X der Vorkammerzündkerze bestimmt.

Gemäß einer weiteren bevorzugten Ausgestaltung der Erfindung weist die Vorkammerzündkerze wenigstens zwei Durchgangsöffnungen auf und ein Gewindeanfang und/oder Gewindeende des Außengewindes der Vorkammerzündkerze liegt in Umfangsrichtung zwischen zwei Durchgangsöffnungen. Besonders bevorzugt liegt der Gewindeanfang und/oder das Gewindeende dabei in der Mitte zwischen zwei Gewindeöffnungen.

### Kurze Beschreibung der Zeichnungen

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Vorkammerzündkerze gemäß einem Ausführungsbeispiel der Erfindung,
- Figur 2: eine schematische, perspektivische Teilansicht der Vorkammerzündkerze von Figur 1 ohne Außengewinde,
- Figur 3: eine schematische, perspektivische Teilansicht der Vorkammerzündkerze von Figur 1 mit Außengewinde,
- Figur 4: eine schematische, perspektivische Teilansicht einer Vorkammerzündkerze ohne Außengewinde,
- Figur 5: eine schematische, perspektivische Teilansicht der Vorkammerzündkerze von Figur 4 mit Außengewinde, und
- Figuren 6 und 7: schematische, perspektivische Teilansichten einer Vorkammerzündkerze, welche gemäß einem nichterfindungsgemäßen Verfahren hergestellt wurde.

### Bevorzugte Ausführungsformen der Erfindung

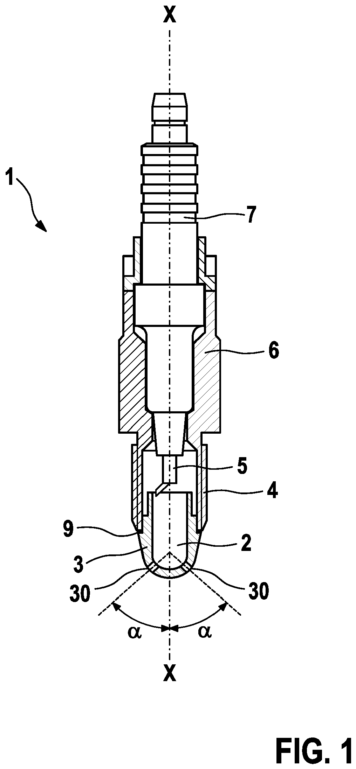

Nachfolgend wird unter Bezugnahme auf die Figuren 1 bis 3 eine Vorkammerzündkerze 1, welche gemäß einem Ausführungsbeispiel der Erfindung hergestellt wurde, beschrieben.

Wie aus Figur 1 ersichtlich ist, umfasst die Vorkammerzündkerze 1 eine Vorkammer 2, welche durch eine im Schnitt U-förmige Kappe 3 definiert ist. Die Kappe 3 ist an einem Gehäuse 6 der Vorkammerzündkerze beispielsweise mittels einer Schweißverbindung 9 fixiert.

Die Vorkammerzündkerze 1 umfasst ferner eine Elektrode 5 und einen Isolator 7.

Am Gehäuse 6 ist am Außenumfang ein Außengewinde 4 vorgesehen. Das Außengewinde 4 ist benachbart zur Kappe 3 ausgebildet und dient zur Fixierung der Vorkammerzündkerze in einem Zylinderkopf oder dgl.

In der Kappe 3 sind mehrere Durchgangslöcher 30 vorgesehen, welche jeweils in einem Winkel α zu einer Mittelachse X-X der Vorkammerzündkerze 1 angeordnet sind. Wenn eine Zündung in der Vorkammer 2 der Vorkammerzündkerze erfolgt, werden sog. Fackelstrahlen durch die Durchgangslöcher 30 in einen Brennraum einer Brennkraftmaschine durch die Durchgangslöcher 30 ausgegeben, welche dann ein Gemisch im Brennraum entzünden.

Da jede Brennkraftmaschine andere Bedingungen hinsichtlich einer Lage der Vorkammerzündkerze zu einem Einspritzstrahl, einer Lage eines Kraftstoffinjektors, einer Geometrie des Brennraums usw. aufweist, muss die Vorkammerzündkerze 1 jeweils individuell am Brennraum der Brennkraftmaschine angeordnet werden, um sicherzustellen, dass die aus den Durchgangslöchern 30 austretenden Fackelstrahlen in optimaler Weise das Gemisch im Brennraum treffen. Ferner muss ein optimaler Gasaustausch innerhalb der Vorkammer 2 vorgenommen werden, um sicherzustellen, dass für einen nächsten Brennzyklus wieder ein zündfähiges Gemisch in der Vorkammer 2 selbst vorhanden ist. Von daher ist es essentiell, dass die Durchgangsöffnungen 30 an den richtigen Positionen relativ zum Brennraum bzw. zum Kraftstoffinjektor angeordnet sind, um alle Bedingungen optimal zu erfüllen.

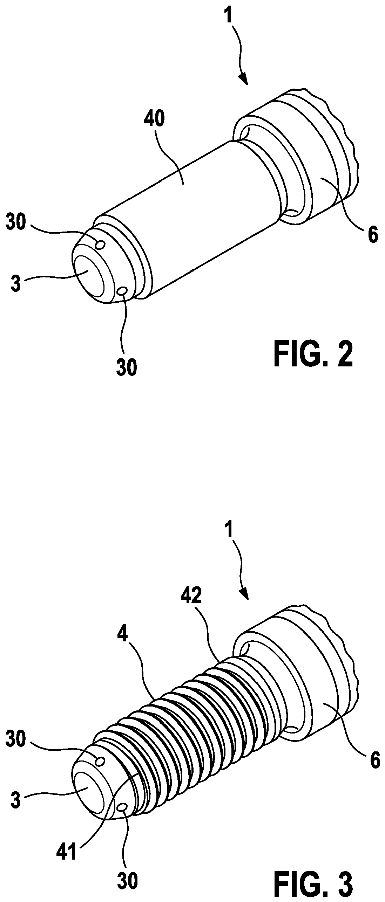

Von daher muss erfindungsgemäß auf eine exakte Positionierung eines Gewindeanfangs 42 und/oder Gewindeendes 41 des Außengewindes 4 relativ zu den Durchgangsöffnungen 30 geachtet werden. Wenn der Gewindeanfang 42 und/oder das Gewindeende 41 des Außengewindes 4 richtig für die jeweilige Brennkraftmaschine relativ zu den Durchgangsöffnungen 30 positioniert ist, kann durch beispielsweise Vorgabe eines vorbestimmten Anzugsdrehmoments für die Vorkammerzündkerze zur Fixierung der Vorkammerzündkerze im Zylinderkopf eine immer gleichbleibende Position der Kappe 3 mit den Durchgangsöffnungen 30 zum Brennraum sichergestellt werden. So wird, wie aus den Figuren 2 und 3 ersichtlich ist, gemäß dem erfindungsgemäßen Verfahren zuerst eine Vorkammerzündkerze bereitgestellt, bei der noch kein Außengewinde ausgebildet ist. Figur 2 zeigt dabei den Zustand, bei dem eine Umfangsfläche 40, an welcher später das Außengewinde 4 hergestellt wird, als Zylinderfläche ohne Gewinde gezeigt ist.

An diese halbfertige Vorkammerzündkerze ohne Außengewinde wird dann die Kappe 3 in beliebiger Position angebracht. Dies kann beispielsweise mittels Anschweißen der Kappe 3 an die Vorkammerzündkerze erfolgen. Die Durchgangsöffnungen 30 in der Kappe 3 sind somit noch in beliebiger Ausrichtung an der nichtfertigen Vorkammerzündkerze 1 angeordnet.

Anschließend erfolgt eine Ausrichtung der Vorkammerzündkerze anhand der Durchgangsöffnungen 30 in der Kappe derart, dass für einen letzten Schritt des Herstellens des Außengewindes 4 ein Gewindeanfang 42 und/oder Gewindeende 41 in einer Relativposition zu wenigstens einer Durchgangsöffnung 30 vorhanden ist. Somit wird der Beginn und/oder Ende des Außengewindes 4 relativ zu den Durchgangsöffnungen 30 positioniert. Dadurch kann später beim Einschrauben der Vorkammerzündkerze 1 an der Brennkraftmaschine immer eine definierte Position der Durchgangsöffnungen 30 am Brennraum der Brennkraftmaschine sichergestellt werden.

Somit ist eine vorbestimmte Orientierung der Durchgangsöffnungen 30 zum Gewindeanfang und/oder Gewindeende 41 des Außengewindes 4 sichergestellt.

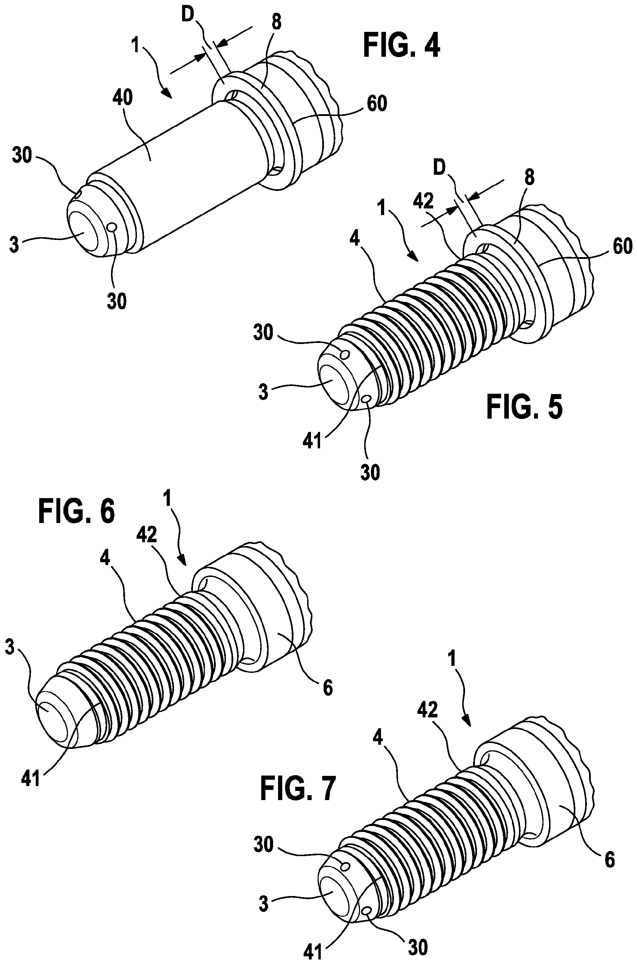

Die Figuren 4 und 5 zeigen eine Vorkammerzündkerze, welche nach einem anderen Verfahren hergestellt wurde. Wie aus Figur 4 ersichtlich ist, wird bei dem zweiten Ausführungsbeispiel ebenfalls zuerst die Vorkammerzündkerze 1 ohne Außengewinde bereitgestellt, so dass statt des Außengewindes eine zylindrische, glatte Umfangsfläche 40 für das Außengewinde vorgesehen ist. Anschließend wird die Kappe 3 in beliebiger Position an der Vorkammerzündkerze 1 fixiert. In einem nächsten Schritt wird eine Scheibe 8 über die Umfangsfläche 40 geschoben, bis die Scheibe 8 an einem Vorsprung 60 anliegt. Dadurch kann eine Winkellage der Durchgangsöffnungen 30 der Kappe 3 am Brennraum durch eine Dicke D der Scheibe 8 definiert werden. Anschließend wird das Außengewinde 4 an der Vorkammerzündkerze 1 hergestellt, wobei ein Gewindeanfang 42 und/oder Gewindeende 41 wieder relativ zu den Durchgangsöffnungen 30 der Kappe 3 positioniert wird.

Es sei angemerkt, dass alternativ auch vor dem Herstellen des Außengewindes 4 eine Lage der Durchgangsöffnungen 30 ermittelt werden kann und dann in Verbindung mit einer vorbestimmten Gewindesteigung eine entsprechend angepasste Dicke D der Scheibe 8 ausgewählt werden kann. Die Scheibe 8 ist vorzugsweise eine Dichtscheibe. Weiter alternativ kann eine Lage der Durchgangsöffnungen 30 und des Gewindeumfangs in einer Vorrichtung ermittelt werden und in Verbindung mit einer Gewindesteigung eine passende Dicke D der Scheibe 8 bestimmt werden.

Somit kann beim zweiten Ausführungsbeispiel die Dichtscheibe zwei Funktionen erfüllen, nämlich einerseits eine Abdichtung der montierten Vorkammerzündkerze am Zylinderkopf und andererseits eine definierte Positionierung der Durchgangsöffnungen 30 der Kappe 3.

Die Figuren 6 und 7 zeigen eine Vorkammerzündkerze, welche gemäß einem nochmals anderen nicht-erfindungsgemäßen Verfahren hergestellt wurde. Bei diesem Ausführungsbeispiel wird eine Kappe 3 ohne Durchgangsöffnungen an der Vorkammerzündkerze 1 montiert. Anschließend wird das Außengewinde 4 hergestellt. Im letzten Schritt werden dann die Durchgangsöffnungen 30 derart positioniert in die Kappe 3 eingebracht, dass eine Relativposition zwischen den Durchgangsöffnungen 30 und einem Gewindeanfang und/oder Gewindeende 41 des Außengewindes 4 in vorbestimmter Weise eingehalten wird.

Wie aus den beschriebenen Ausführungsbeispielen entnehmbar ist, können Durchgangsöffnungen 30 der Kappe 3 somit in gerichteter Weise an einem Brennraum einer Brennkraftmaschine positioniert werden, wodurch die Vorkammer 2 besser ausgespült wird und ein Kraftstoff-Luft-Gemisch besser in die Vorkammer geleitet werden kann. Durch diese bessere Ausspülung und Befüllung der Vorkammer 2 mit dem Kraftstoff-Luft-Gemisch ist es möglich, dass dieses Gemisch in der Vorkammer besser gezündet wird und deutlich schneller verbrennt. Durch die schnellere Verbrennung in der Vorkammer 2 können dann Fackelstrahlen, welche durch die Durchgangsöffnungen 30 in den Brennraum gelangen, früher und weiter in den Brennraum gelangen. Dadurch kann das Kraftstoff-Luft-Gemisch im Brennraum selbst schneller und effektiver entflammt werden, was letztendlich zu einer schnelleren und vollkommeneren Verbrennung in der Brennkammer der Brennkraftmaschine führt.

Das erfindungsgemäße Verfahren ist dabei für alle Arten von Zündkerzen mit Vorkammer und Kappe anwendbar.

## Patentansprüche

1. Verfahren zur Herstellung einer Vorkammerzündkerze (1) mit einem Außengewinde (4) und einer Kappe (3) mit wenigstens einer Durchgangsöffnung (30), umfassend die Schritte:
- Bereitstellen der Vorkammerzündkerze (1) ohne Kappe (3) und mit einer zylindrischen Umfangsfläche (40) für das Außengewinde (4),
- Montieren der Kappe (3), welche wenigstens eine Durchgangsöffnung (30) aufweist, in beliebiger Ausrichtung an der Vorkammerzündkerze (1), und
**gekennzeichnet durch** das
- Herstellen des Außengewindes (4) an der Umfangsfläche (40) derart, dass ein Gewindeanfang (42) und/oder Gewindeende (41) des Außengewindes (4) in Bezug auf die Durchgangsöffnung (30) an einer vorbestimmten Position ausgerichtet ist.

2. Verfahren nach Anspruch 1, wobei das Außengewinde (4) mittels Rollen oder Schneiden hergestellt wird.

3. Verfahren nach einem der vorhergehenden Ansprüche, wobei eine Bestimmung des Gewindeanfangs (42) und/oder Gewindeendes (41) des Außengewindes (4) in Abhängigkeit einer Position der Durchgangsöffnung (30) in der Kappe (3) mittels eines optischen Verfahrens erfolgt.

4. Verfahren nach einem der vorhergehenden Ansprüche, wobei zusätzlich eine Scheibe (8) mit einer vorbestimmten Dicke (D) am Außenumfang der Vorkammerzündkerze (1), benachbart zur Umfangsfläche (40) für das Außengewinde (4) angeordnet wird und dann das Außengewinde (4) hergestellt wird.

5. Verfahren nach Anspruch 4, wobei eine Dicke (D) der Scheibe (8) in Abhängigkeit einer Lage der Durchgangsöffnung (30) der Kappe (3) bestimmt wird.

6. Verfahren nach Anspruch 4 oder 5, wobei die Scheibe (8) eine Dichtscheibe ist.

7. Verfahren nach einem der vorhergehenden Ansprüche, wobei die Vorkammerzündkerze (1) wenigstens zwei Durchgangsöffnungen (30) aufweist und der Gewindeanfang (42) und/oder das Gewindeende (41) des Außengewindes (4) in Umfangsrichtung zwischen den beiden Durchgangsöffnungen (30) positioniert wird.

## Claims

1. Method for producing a prechamber spark plug (1) with an external thread (4) and a cap (3) with at least one through opening (30), comprising the following steps:
- providing of the prechamber spark plug (1) without cap (3) and with a cylindrical circumferential surface (40) for the external thread (4),
- mounting of the cap (3), which has at least one through opening (30), in any desired orientation on the prechamber spark plug (1), and
**characterized by** the
- production of the external thread (4) on the circumferential surface (40) in such a way that a thread start (42) and/or thread end (41) of the external thread (4) is oriented at a predefined position in relation to the through opening (30).

2. Method according to Claim 1, the external thread (4) being produced by means of rolling or cutting.

3. Method according to either of the preceding claims, a determination of the thread start (42) and/or thread end (41) of the external thread (4) taking place in a manner which is dependent on the position of the through opening (30) in the cap (3) by means of an optical method.

4. Method according to one of the preceding claims, a disc (8) with a predefined thickness (D) additionally being arranged on the outer circumference of the prechamber spark plug (1), adjacently with respect to the circumferential surface (40) for the external thread (4), and the external thread (4) then being produced.

5. Method according to Claim 4, a thickness (D) of the disc (8) being determined in a manner which is dependent on a position of the through opening (30) of the cap (3).

6. Method according to Claim 4 or 5, the disk (8) being a sealing disc.

7. Method according to one of the preceding claims, the prechamber spark plug (1) having at least two through openings (30), and the thread start (42) and/or the thread end (41) of the external thread (4) being positioned in the circumferential direction between the two through openings (30).

## Revendications

1. Procédé de fabrication d'une bougie d'allumage (1) à préchambre comprenant un filetage externe (4) et un capuchon (3) qui présente au moins une ouverture traversante (30), comprenant les étapes suivantes :
- fournir la bougie d'allumage (1) à préchambre sans capuchon (3) et avec une surface périphérique cylindrique (40) pour le filetage externe (4),
- monter le capuchon (3), qui présente au moins une ouverture traversante (30), dans une orientation quelconque sur la bougie d'allumage (1) à préchambre, et **caractérisé par** le fait de
- réaliser le filetage externe (4) sur la surface périphérique (40) de telle sorte qu'un début de filetage (42) et/ou une fin de filetage (41) du filetage externe (4) soit aligné(e) dans une position prédéterminée par rapport à l'ouverture traversante (30).

2. Procédé selon la revendication 1, dans lequel le filetage externe (4) est réalisé par roulage ou par coupe.

3. Procédé selon l'une quelconque des revendications précédentes, dans lequel une détermination du début (42) et/ou de la fin (41) du filetage externe (4) est effectuée en fonction d'une position de l'ouverture traversante (30) dans le capuchon (3) au moyen d'un procédé optique.

4. Procédé selon l'une quelconque des revendications précédentes, dans lequel on dispose en outre une rondelle (8) d'épaisseur prédéterminée (D) sur la circonférence externe de la bougie d'allumage (1) à préchambre, adjacente à la surface périphérique (40) pour le filetage externe (4), puis on réalise le filetage externe (4).

5. Procédé selon la revendication 4, dans lequel une épaisseur (D) de la rondelle (8) est déterminée en fonction d'une position de l'ouverture traversante (30) du capuchon (3).

6. Procédé selon la revendication 4 ou 5, dans lequel la rondelle (8) est une rondelle d'étanchéité.

7. Procédé selon l'une des revendications précédentes, dans lequel la bougie d'allumage (1) à préchambre présente au moins deux ouvertures traversante (30) et le début (42) et/ou la fin (41) du filetage externe (4) est positionné(e) dans la direction circonférentielle entre les deux ouvertures traversante (30).
